# EUROPÄISCHE PATENTSCHRIFT

(11) **EP 3 074 211 B1**
(45) Veröffentlichungstag und Bekanntmachung des Hinweises auf die Patenterteilung: **30.08.2023**
(21) Anmeldenummer: 14798753.1
(22) Anmeldetag: 06.11.2014
(51) Int. Cl.: B27N 1/00

(54) **REPARATURPFLASTER**
REPAIR PATCH
EMPLATRE

(30) Priorität: 26.11.2013 DE 102013224153
(43) Veröffentlichungstag der Anmeldung: 05.10.2016
(73) Patentinhaber: Rema Tip Top AG, 85586 Poing (DE)
(72) Erfinder: CASPER, Christian, 85229 Markt Indersdorf (DE); SCHEUNGRABER, Patric, 85652 Pliening (DE); THALHAMMER, Dieter, 85757 Karlsfeld (DE)
(74) Vertreter: MERH-IP Matias Erny Reichl Hoffmann Patentanwälte PartG mbB
(86) Internationale Anmeldenummer: PCT/EP2014/073909
(87) Internationale Veröffentlichungsnummer: WO 2015/078676

(56) Entgegenhaltungen:
- EP-A1- 0 912 323
- DE-A1-102009 050 899
- US-A- 5 695 577
- US-A1- 2013 299 065

## Beschreibung

Die vorliegende Erfindung betrifft ein Reparaturpflaster (Baukastenpflaster) für Fahrzeugreifen, sowie ein Verfahren zur Reparatur von elastomeren Bauteilen mittels des Reparaturpflasters. Erfindungsgemäß reduziert sich der Aufwand bei der Reparatur des beschädigten Bauteils und bei der Fertigung der Pflaster. So müssen für die Fertigung beispielsweise deutlich weniger Halbzeuge vorgehalten werden als bei herkömmlichen Pflastern.

Beschädigte Reifen sind unter bestimmten Bedingungen im Bereich der Seitenwand, Schulter und Lauffläche mit speziellen Materialien reparierbar. Hierzu wird der Schadensbereich bzw. die Schadstelle im Reifen ausgearbeitet und wieder verfüllt. Im Bereich der Schadenstelle wird auf der Reifeninnenseite ein Reparaturkörper angebracht. Dieser wird (Reparatur-)Pflaster genannt. Das Pflaster enthält Festigkeitsträger, welche die durch den Schaden zerstörten Festigkeitsträger des Reifens überbrücken und dadurch die Einsatztauglichkeit des Reifens wiederherstellen.

Bis dato musste eine große Anzahl von Reparaturpflastern mit vielen unterschiedlichen Abmessungen gefertigt und vorgehalten werden, um im Hinblick auf zahlreiche Parameter, wie herstellerspezifische Faktoren umfassend u.a. die Reifendimensionen, Tragfähigkeit, Betriebsdruck, Verformungsverhalten, etc., und im Zusammenspiel mit dem eingesetzten Reparaturmaterial eine dauerhaft betriebssichere Reparatur des Fahrzeugreifens mittels eines Reparaturpflasters zu gewährleisten. Die für eine betriebssichere Reparatur geforderten Außenabmessungen des Pflasters wurden bis dato auf Basis empirischer Untersuchungen und praktischer Prüfungen und unter Berücksichtigung bestehender gesetzlicher Vorschriften (z.B. ECE R108 und ECE R 109) definiert und konnten in Relation zu Abmaßen der Schadstelle aus sogenannten Schadenstabellen bestimmt werden.

Die DE 10 2009 050 899 A1 betrifft ein Reparaturpflaster für ein elastomeres Bauteil, insbesondere für einen Fahrzeugreifen, mit einer Deckschicht, einer Verbindungsschicht zur Auflage auf einer Wandung des elastomeren Bauteils und zumindest einer zwischen der Verbindungsschicht und der Deckschicht angeordneten Zwischenschicht.

Die EP 0 912 323 A1 beschreibt ein Reparaturpflaster für Luftreifen bestehend aus einer reaktionsfähigen Puffer- und Verbindungsschicht zur Auflage auf der inneren Reifenwandung, aus einer schmaleren Zwischenschicht mit eingebetteten nebeneinander längsgerichteten Kordeinlagen, aus einer weiteren Gummischicht mit eingebetteten nebeneinander längsgerichteten Kordfäden, welche die armierte Zwischenschicht überdeckt, und einer in das Reifeninnere weisenden Deckschicht.

Die US 2013/0299065 A1 beschreibt ein Reparaturpflaster mit einer Gewebeschicht, die ein erstes und zweites Verstärkungsgewebe aufweist.

Die US 5,695,577 A beschreibt ein Verfahren zum Reparieren von Fahrzeugreifen und ein Reparaturpflaster, das eine Verstärkungslage aus Gewebelagen aufweist.

Der Nachteil der bis dato bekannten Reparaturpflaster ist, dass eine große Anzahl Reparaturpflaster mit jeweils unterschiedlichen Außenabmessungen gefertigt und vorgehalten werden musste, damit im Wesentlichen für alle Reifenschäden, insbesondere für alle Größen von Schadstellen eines Reifens, die im Hinblick auf eine betriebssichere Reparatur geforderten Reparaturpflaster bereitgestellt werden konnten.

Dies wiederrum erfordert, dass in der Fertigung eine große Anzahl von unterschiedlichen Halbzeugen vorgehalten werden muss und die Fertigung ganz allgemein komplex und aufwendig ist.

Ein weiterer Nachteil der bekannten Reparaturpflaster ist es, dass der Anwender mit komplexen Schadentabellen arbeiten muss, da darin eine große Anzahl unterschiedlicher Pflastertypen einer Vielzahl unterschiedlicher Schadstellen zugeordnet werden musste.

Es ist eine Aufgabe der vorliegenden Erfindung ein Reparaturpflaster für Fahrzeugreifen, bereitzustellen, das mit weniger Aufwand fertigbar ist, weniger komplex in der Anwendung ist und eine hohe Einsatzzuverlässigkeit bietet. Zudem ist es eine Aufgabe der Erfindung ein entsprechendes, weniger komplexes Reparaturverfahren unter Verwendung eines Reparaturpflasters, bereitzustellen.

Die Aufgabe wird von der Erfindung gemäß den unabhängigen Patentansprüchen gelöst. Weitere bevorzugte Weiterentwicklungen der Erfindung sind in den abhängigen Patentansprüchen beschrieben.

Das offenbarte Reparaturpflaster für ein elastomeres Bauteil, insbesondere für einen Fahrzeugreifen kann eine Deckschicht, eine Verbindungsschicht zur Auflage auf einer Schadstelle des elastomeren Bauteils und zumindest einer Zwischenschicht aufweisen. Die zumindest eine Zwischenschicht kann zwischen der Deckschicht und der Verbindungsschicht angeordnet sein. Das Reparaturpflaster kann solche/derartige Außenabmessungen aufweisen, dass ein Abmessungsquotient, der zumindest mittels zumindest eines Größenparameters der Schadstelle gebildet sein kann, innerhalb eines vorgegebenen Wertebereiches liegen kann. Optional kann die Anzahl der Zwischenschichten auch von dem zumindest einen Größenparameter der Schadstelle abhängig sein.

Unter Außenabmessungen des Reparaturpflasters ist z.B. eine Länge, ein Durchmesser, eine Breite und/oder eine Fläche zu verstehen. Bevorzugt umfassen die offenbarten Außenabmessungen, eine Länge und eine Breite. Der Abmessungsquotient setzt insbesondere zumindest eine Außenabmessung mit dem Größenparameter der Schadstelle in ein Verhältnis. Bevorzugt kann der Abmessungsquotient z.B. im Zähler eine Länge des Pflasters oder eine Länge bzw. Breite der größten Zwischenschicht und im Nenner eine Länge oder Fläche der Schadstelle im aufweisen.

Die Erfindung ermöglicht vorteilhaft, dass ein rechnerisch fassbarer Zusammenhang zwischen der Größe des Schadens und der Anzahl sowie der Abmessungen der Verstärkungslagen/Zwischenschichten im Pflaster hergestellt werden kann. Somit können Material, Anzahl und Größe der im Pflaster eingesetzten Verstärkungslagen/Zwischenschichten auf den zu reparierenden Reifen und die Größe des Schadens einfacher und weniger komplex abgestimmt werden. Bei der Auslegung von Pflastern stehen also Anzahl sowie Abmessungen der Verstärkungslagen im Pflaster bzw. des Pflasters selbst in einer Beziehung zur Größe des Schadens und zur Reifenausführung.

Ferner wird aufgrund der erfindungsgemäßen Abstimmung der Abmessungen des Pflasters und der Anzahl Verstärkungslagen/Zwischenschichten auf die Schadensgröße erreicht, dass die Fertigung der Pflaster weniger aufwendig ist. So können bei den offenbarten Pflastern fertigungstechnische Gesichtspunkte dahingehend berücksichtigt werden, dass eine möglichst geringe Zahl von Pflastern mit einer möglichst geringen Zahl von Bauelementen hergestellt werden kann. Dies dient der Erhöhung der Fertigungsgenauigkeit wie auch einer Senkung der Fertigungskosten. So haben in der Praxis gewonnenen Erfahrungen gezeigt, dass die üblicherweise auftretenden Schadensarten bzw. -größen bereits mit z.B. nur noch 4 anstatt von 11 verschiedenen Pflastertypen bzw. -abmessungen abgedeckt werden können. Pflaster mit identischen Außenabmessungen unterscheiden sich durch die Zahl der Verstärkungseinlagen. Dies führt auch dazu, dass die Anzahl der Halbzeuge, die für die Produktion benötigt werden, deutlich auf bis zu ein Drittel der bei herkömmlichen Pflastern benötigen Halbwerkzeuge reduziert werden kann.

Die Anwendung der Pflaster wird bereits dadurch erheblich vereinfacht, da z.B. Schadentabellen, die die einzusetzenden Pflaster in Abhängigkeit von der Schadengröße weniger komplex aufgebaut sind.

Der Größenparameter der Schadstelle kann eine (Ober-)Fläche der Schadstelle, ein Radius der Schadstelle, eine Länge der Schadstelle in Umfangsrichtung des Fahrzeugreifens und/oder eine Länge der Schadstelle in radialer Richtung des Fahrzeugreifens umfassen.

Ferner kann sich ein Abmessungsquotient QL zumindest aus einer Breite des Reparaturpflasters oder einer Breite der größten Zwischenschicht, bevorzugt wird diese quer zur Faserrichtung der Verstärkungsfasern der Zwischenschicht gemessen, im Verhältnis zu zumindest dem Größenparameter einer Länge der Schadstelle in einer Umfangsrichtung des Fahrzeugreifens ergeben. Der vorgegebene Wertebereich wird QL = 2 - 9.

Ein Abmessungsquotient QR kann sich zumindest aus einer Länge des Reparaturpflasters oder einer Länge der größten Zwischenschicht, bevorzugt wird diese längs zur Faserrichtung der Verstärkungsfasern der Zwischenschicht gemessen, im Verhältnis zu zumindest dem Größenparameter einer Länge der Schadstelle in einer Radialrichtung des Fahrzeugreifens ergeben. Der vorgegebene Wertebereich wird QR = 4 - 13.

Ferner kann der vorgegebene Wertebereich QL = 3 - 9 und QR = 4 - 10 für eine Schadstelle mit einer Position in einem Bereich einer Seitenwand des Fahrzeugreifens sein. Der vorgegebene Wertebereich kann QL = 2 - 5 und QR = 4 - 13 für eine Schadstelle mit einer Position im Bereich der Lauffläche des Fahrzeugreifens sein.

Allgemein lässt sich sagen, dass mit zunehmender Schadengröße auch die Abmessungen des zur Reparatur eingesetzten Pflasters ansteigen. Da die Kraftübertragung von den Festigkeitsträgern im Reifen in die Festigkeitsträger des Pflasters über den dazwischenliegenden Gummi erfolgt, ist eine Überdeckung zwischen Schadenabmessung, üblicherweise mit A und R angegeben, und der Länge L und der Breite B der Verstärkungslage im Pflaster erforderlich. Mit A ist dabei die Schadenausdehnung in Reifenumfangsrichtung, mit B die in radialer Richtung bezeichnet. Das sogenannte C-Maß für runde Schäden sowie die zulässige Schadengröße S im Schulterbereich können aus den obigen Werten berechnet werden.

Die oben genannten Wertebereiche geben Werte des Abmessungsquotienten in Relation zu einer Position der Schadstelle und im Hinblick auf eine optimale Reparaturzuverlässigkeit an.

Ferner kann der Abmessungsquotient zumindest einen Wert für eine Größe einer Oberfläche des Reparaturpflasters im Verhältnis zu zumindest einem Wert einer Größe der Oberfläche der Schadstelle wiedergeben. Dies vereinfacht den Reparaturprozess insofern noch weiter, da nur jeweils ein Wert, nämlich jeweils die Fläche, berücksichtigt wird anstatt Längen und Breiten.

Ferner kann die Anzahl der Zwischenschichten derart von dem Größenparameter der Schadstelle abhängen, dass eine maximal zulässige Ausbeulung des Reparaturpflasters nicht überschritten wird. Eine maximale Ausbeulung wird von Sicherheitsvorschriften vorgegeben, die z.B. von vorgegebenen Schadentabellen berücksichtigt werden, und hängt insbesondere von den Faktoren Schadengröße, vorgegebener Luftdruck des beschädigten Reifens und Reifentyp ab.

Die vordefinierte Abstimmung der Anzahl der Zwischenschichten auf die Größe der Schadstelle erlaubt eine weiter gesteigerte Reparaturzuverlässigkeit. Bevorzugt ist zumindest eine Zwischenschicht bei kleineren Schäden vorgesehen und zumindest zwei Zwischenschichten bei größeren Schäden.

Die zumindest eine Zwischenschicht kann im Wesentlichen strukturiert angeordnete Fasern aufweisen. Das Material der strukturiert angeordneten Fasern kann Metall, Naturfasern, insbesondere Baumwolle, Kunststoff, Glas und/oder Kohlenstoff umfassen. Die Außenabmessungen des Reparaturpflasters können im Wesentlichen den Außenabmessungen zumindest der zumindest einen Zwischenschicht entsprechen. Die Fasern erlauben eine optimale Kraftübertragung über die Schadstelle hinweg, so dass der Reifen nach der Reparatur eine optimale Einsatzzuverlässigkeit bietet.

Unterschiedliche Außenabmessungen des Reparaturpflasters können mit unterschiedlicher Anzahl Zwischenschichten als verschiedene Reparaturpflastertypen vordefiniert sein. Die für einen konkreten Fall vordefinierten Pflastertypen können dann z.B. wenig komplex aus einer Schadentabelle, die Auskunft darüber, welcher Schaden in welchem Reifen mit welchem Pflaster repariert werden kann, gibt, entnommen werden.

Offenbart wird ebenfalls eine Verwendung des Reifenreparaturpflasters zur Reparatur eines Fahrzeugreifens, der eine Schadstelle aufweist, vorgesehen sein. Weiter wird ein erfindungsgemäßes Verfahren in Anspruch 10 definiert.

Das Reparaturverfahren unter Einsatz der Reparaturpflaster kann schnell und mit reduziertem Arbeitsaufwand durchgeführt werden. Aufgrund der reduzierten Anzahl von vorgesehenen Pflastertypen können auch weniger Fehler bei der Bestimmung der benötigten Pflastertypen passieren, so dass die Zuverlässigkeit der Reparatur besser sichergestellt wird.

Ferner kann eine Bestimmung der Außenabmessungen des Reparaturpflasters und der Anzahl Zwischenschichten mittels einer Schadentabelle durchgeführt werden. Die Schadentabelle kann den auszuwählenden Reparaturpflastertyp, insbesondere die Außenabmessungen und die Anzahl Zwischenschichten, abhängig von einer Position der Schadenstelle an dem Fahrzeugreifen und dem zumindest einen Größenparameter der Schadenstelle vorgeben.

Zusammenfassend gilt für die Erfindung, dass auf Basis zahlreicher Prüfstands- und Praxistests gewonnener Erkenntnisse bestätigt wurde, dass die Pflaster und das zugehörige Reparaturverfahren die Reparatur eines Fahrzeugreifens vereinfachen, zuverlässiger machen und gleichzeitig der Fertigungsaufwand für die Pflaster reduziert werden kann. Vorteilhaft wird nicht nur die Überdeckung des Pflasters über den Schaden betrachtet, sondern auch die versteifende Wirkung der mehrfachen Zwischenlage zur Verminderung der Ausbeulung. Dies führte zur Definition von Reparaturpflastern, bei denen es bei gleichen Außenabmessungen z.B. zwei Versionen mit unterschiedlicher Zwischenlagenzahl gibt. Diese empirisch gewonnenen Erkenntnisse ermöglichen eine Zusammenfassung von Reifengrößen in eine Gruppe und Straffung des Reparaturpflasterprogramms, was zu einer übersichtlicheren Schadentabelle mit weniger Fehlermöglichkeiten in der Anwendung führt. Die Anzahl der verschiedenen zur Fertigung der Pflasterlinie erforderlichen Halbzeuge konnte beispielsweise gegenüber herkömmlichen Pflastern von 64 auf 24 gesenkt werden.

Die Erfindung wird im Folgenden exemplarisch mit Bezug auf die beigefügten, schematischen Zeichnungen beschrieben. Es zeigen
Fig. 1 einen Querschnitt durch das Reparaturpflaster und
Fig. 2 einen Reparaturverfahrensablauf.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

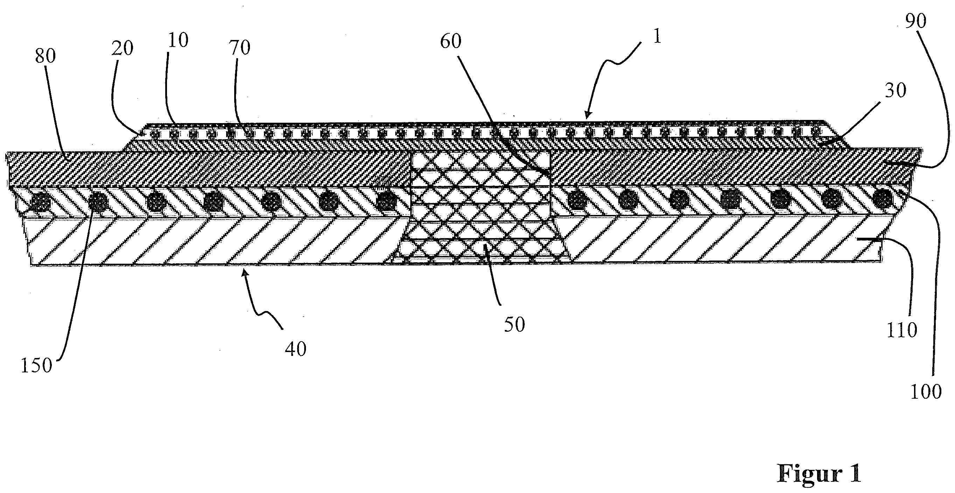

Bezugnehmend auf Fig. 1 ist schematisch und beispielhaft ein Reparaturpflaster 1 für Fahrzeugreifen gemäß der vorliegenden Erfindung dargestellt. Auf der Oberseite des Reparaturpflasters 1 ist eine Deckschicht 10 ausgebildet. Die Deckschicht 10 kann die Funktion einer Schutzschicht gegen äußere Beschädigungen der darunterliegenden, insbesondere kraftübertragenden, Schichten haben, Informationen für den Anwender, wie z.B. Anwendungshinweise oder Typenbezeichnungen des Reparaturpflasters, anzeigen und/oder graphische bzw. dekorative Elemente aufweisen.

Angrenzend an die Deckschicht 10 ist eine Zwischenschicht 20 ausgebildet, welche eine Vielzahl von faserförmigen Einlagen 70 aufweist. Diese Einlagen 70 sind in der Regel über die Dicke der Zwischenschicht 20 in einer oder mehreren Schichten angeordnet, wobei jede einzelne Faserschicht eine strukturelle Anordnung der faserförmigen Einlagen 70 aufweist. Die Orientierung der einzelnen Faserschichten in der Zwischenschicht 20 können gegen einander verschieden sein. Insbesondere bei größeren Schäden im Laufflächen- oder Seitenwandbereich dienen diese Einlagen 70 dazu, die im Schadensbereich unterbrochenen Festigkeitsträger zu überbrücken.

In Figur 1 ist ein Reparaturpflastertyp gezeigt, der eine Zwischenschicht 20 aufweist.

Die Anzahl der Zwischenschichten 20 kann jedoch größer sein, z.B. können zwei bis zehn Zwischenschichten 20 vorgesehen sein. Die Anzahl der Zwischenschichten 20 wird dadurch bestimmt, dass ein Reparaturpflastertyp mit im Hinblick auf die Größe der Schadstelle vorbestimmten Außenabmessungen und eben der Anzahl Zwischenlagen 20 herangezogen wird.

Auf der Unterseite des Reparaturpflasters 1 ist eine Verbindungsschicht 30 ausgebildet, welche während und nach der Reparatur mit einer Wandung 80 des Fahrzeugreifens in Kontakt steht. Weiterhin steht die Verbindungsschicht 30 vor und nach einer Vulkanisation des Fahrzeugreifens mit einer Rohgummimasse 50 in Kontakt.

Im Rahmen der Reparatur des beschädigten Fahrzeugreifens wird die schadhafte Stelle des Fahrzeugreifens aufgeraut, so dass Staub und Schmutz entfernt werden und eine unbeschädigte Schicht der in dem Fahrzeugreifen enthaltenen Komponenten freigelegt wird, wobei eine im Wesentlichen konische Gestaltung für eine Reparaturstelle bzw. Schadstelle 60 im Fahrzeugreifen gebildet wird. Anschließend wird die Reparaturstelle 60 mit der Rohgummimasse 50 vor der Vulkanisation der Verbindungsschicht 30 gefüllt.

Auf die Schadstelle 60 wird anschließend das auf eine entsprechende Fügetemperatur vorgewärmte Reparaturpflaster 1 aufgelegt. Im Hinblick auf ein betriebssicheres Reparaturergebnis werden die Abmessungen des Reparaturpflasters 1 derart bestimmt, so dass ein Abmessungsquotient Q in einem vorbestimmten Wertebereich liegt und die Anzahl Zwischenschichten 20 darauf abgestimmt werden kann.

Nach dem Anrollen des Reparaturpflasters erfolgt die Vulkanisation der Reparaturstelle und des Reparaturpflasters unter Druck und Temperatur mittels einer geeigneten Vorrichtung oder im Autoklaven.

Der Aufbau des Fahrzeugreifens ist hier beispielhaft für den Flankenbereich eines Radial-LKW-Reifens derart dargestellt, dass die Wandung 80 des Fahrzeugreifens durch einen Innerliner 90 gebildet wird, wobei sich an diesen eine Karkasse 100 anschließt, welche in Form einer Einlage Kord 150 aufweist. Angrenzend an die Karkasse 100 befindet sich der Seitenwandgummi 110 des Fahrzeugreifens.

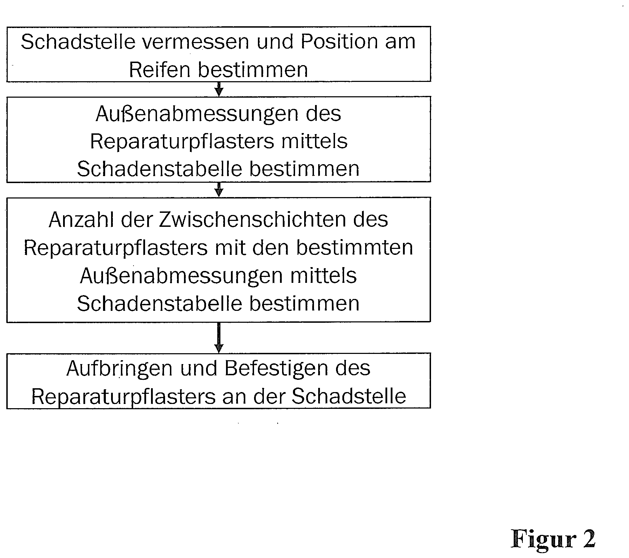

Fig. 2 zeigt weiterhin einen möglichen Verfahrensablauf zur Montage des Reparaturpflasters. So wird in einem Schritt die Größe des Schadens vermessen. Dieser Schritt kann z.B. umfassen, dass die Länge und/oder Breite eines Schadens, z.B. eines Risses oder eines Loches im Reifen, erfasst wird. Bevorzugt kann eine Schadentabelle herangezogen werden, die erlaubt, die korrekten Außenabmessungen und die Anzahl Zwischenschichten für den vorliegenden Schaden mit geringem Aufwand zu bestimmen.

Wenn die Außenabmessungen und die Anzahl Zwischenschichten bestimmt wurden, kann die Montage des Reparaturpflasters 1 durchgeführt werden. Dazu wird das Pflaster 1 mittels der Verbindungsschicht 30 mit der beschädigten Oberfläche des Bauteils fest verbunden. Die feste Verbindung kann auf unterschiedliche Art und Weise herbeigeführt werden, wobei besonders bevorzugt eine Klebeverbindung mittels Klebestoffen ausgebildet wird und/oder das Pflaster mittels eines Vulkanisationsprozesses mit dem Gummi des zu reparierenden Bauteils verbunden wird.

Zusammengefasst stellt die Erfindung ein wenig aufwendig zu handhabendes Reparaturpflaster bzw. Baukastenpflaster und ein dazugehöriges Reparaturverfahren für Fahrzeugreifen bereit, das weniger aufwendig in der Fertigung ist und eine erhöhte Betriebssicherheit des reparierten Bauteils ermöglicht.

## Patentansprüche

1. Fahrzeugreifen mit Schadstelle und Reparaturpflaster, wobei das Reparaturpflaster aufweist:
- eine Deckschicht (10),
- eine Verbindungsschicht (30) zur Auflage auf einer Schadstelle (60) des Fahrzeugreifens, und
- zumindest eine Zwischenschicht (20), die zwischen der Deckschicht und der Verbindungsschicht angeordnet ist,
wobei
- das Reparaturpflaster (1) derartige Außenabmessungen aufweist, dass ein Abmessungsquotient (Q), der zumindest mittels zumindest eines Größenparameters der Schadstelle (60) gebildet ist, innerhalb eines vorgegebenen Wertebereiches liegt, und
- die Anzahl der Zwischenschichten (20) abhängig von dem zumindest einen Größenparameter der Schadstelle (60) ist, wobei
ein Abmessungsquotient QL zumindest aus einer Breite des Reparaturpflasters im Verhältnis zu zumindest dem Größenparameter einer Länge der Schadstelle (60) in einer Umfangsrichtung des Fahrzeugreifens ergibt, wobei
der vorgegebene Wertebereich QL = 2 - 9 ist,
und sich ein Abmessungsquotient QR zumindest aus einer Länge des Reparaturpflasters im Verhältnis zu zumindest dem Größenparameter einer Länge der Schadstelle (60) in einer Radialrichtung des Fahrzeugreifens ergibt, wobei
der vorgegebene Wertebereich QR = 4 - 13 ist.

2. Fahrzeugreifen nach Patentanspruch 1, **gekennzeichnet dadurch, dass** der Größenparameter der Schadstelle (60) eine Oberfläche der Schadstelle, einen Radius der Schadstelle, eine Länge der Schadstelle in Umfangsrichtung des Fahrzeugreifens und/oder eine Länge der Schadstelle in radialer Richtung des Fahrzeugreifens umfasst.

3. Fahrzeugreifen nach zumindest einem der voranstehenden Patentansprüche, **gekennzeichnet dadurch, dass** der vorgegebene Wertebereich QL = 3 - 9 und QR = 4 - 10 für eine Schadstelle (60) mit einer Position in einem Bereich einer Seitenwand des Fahrzeugreifens ist; und
der vorgegebene Wertebereich QL = 2 - 5 und QR = 4 - 13 für eine Schadstelle (60) mit einer Position im Bereich der Lauffläche des Fahrzeugreifens ist.

4. Fahrzeugreifen nach zumindest einem der voranstehenden Patentansprüche, **gekennzeichnet dadurch, dass** der Abmessungsquotient (Q) zumindest einen Wert für eine Größe einer Oberfläche des Reparaturpflasters im Verhältnis zu zumindest einem Wert einer Größe der Oberfläche der Schadstelle (60) wiedergibt.

5. Fahrzeugreifen nach zumindest einem der voranstehenden Patentansprüche, **gekennzeichnet dadurch, dass** die Anzahl der Zwischenschichten (20) derart von dem Größenparameter der Schadstelle (60) abhängt, dass eine maximal zulässige Ausbeulung des Reparaturpflasters nicht überschritten wird.

6. Fahrzeugreifen nach zumindest einem der voranstehenden Patentansprüche, **gekennzeichnet dadurch, dass** die zumindest eine Zwischenschicht (20) im Wesentlichen strukturiert angeordneten Fasern (70) aufweist.

7. Fahrzeugreifen nach Patentanspruch 6, **gekennzeichnet dadurch, dass** das Material der strukturiert angeordneten Fasern (70) Metall, Naturfasern, insbesondere Baumwolle, Kunststoff, Glas und/oder Kohlenstoff umfasst.

8. Fahrzeugreifen nach zumindest einem der voranstehenden Patentansprüche, **gekennzeichnet dadurch, dass** die Außenabmessungen des Reparaturpflasters (1) im Wesentlichen den Außenabmessungen zumindest der zumindest einen Zwischenschicht (20) entsprechen.

9. Fahrzeugreifen nach zumindest einem der voranstehenden Patentansprüche, **gekennzeichnet dadurch, dass** unterschiedliche Außenabmessungen des Reparaturpflasters (1) mit unterschiedlicher Anzahl Zwischenschichten (20) als verschiedene Reparaturpflastertypen vordefiniert sind.

10. Verfahren zur Reparatur eines Fahrzeugreifens mittels eines Reparaturpflasters (1) gemäß einem der voranstehenden Patentansprüche, wobei
- Außenabmessungen des Reparaturpflasters (1) und eine Anzahl von Zwischenschichten (20) des Reparaturpflasters (1) abhängig von zumindest einem Größenparameter einer Schadstelle (60) des Fahrzeugreifens bestimmt werden, und
- das Reparaturpflaster (1) mit dem Fahrzeugreifen im Bereich der Schadstelle (60) fest verbunden wird, wobei
die Außenabmessungen derart bestimmt werden, dass Werte eines Abmessungsquotienten (Q) innerhalb eines vorgegebenen Wertebereiches liegen, wobei
ein Abmessungsquotient QL zumindest aus einer Breite des Reparaturpflasters im Verhältnis zu zumindest dem Größenparameter einer Länge der Schadstelle (60) in einer Umfangsrichtung des Fahrzeugreifens ergibt, wobei
der vorgegebene Wertebereich QL = 2 - 9 ist,
und sich ein Abmessungsquotient QR zumindest aus einer Länge des Reparaturpflasters im Verhältnis zu zumindest dem Größenparameter einer Länge der Schadstelle (60) in einer Radialrichtung des Fahrzeugreifens ergibt, wobei
der vorgegebene Wertebereich QR = 4 - 13 ist.

11. Verfahren gemäß Patentanspruch 10, wobei eine Bestimmung der Außenabmessungen des Reparaturpflasters (1) und der Anzahl Zwischenschichten (20) mittels einer Schadentabelle durchgeführt wird, wobei die Schadentabelle den auszuwählenden Reparaturpflastertyp, insbesondere die Außenabmessungen und die Anzahl Zwischenschichten (20), abhängig von einer Position der Schadenstelle (60) an dem Fahrzeugreifen und dem zumindest einen Größenparameter der Schadenstelle (60) vorgibt.

## Claims

1. A vehicle tire with a damaged area and a repair patch, the repair patch comprising
- a cover layer (10),
- a connecting layer (30) for placement on a damaged spot (60) of the vehicle tire, and
- at least one intermediate layer (20), which is arranged between the cover layer and the connecting layer, wherein
- the repair patch (1) has external dimensions such that a dimensional quotient (Q), which is formed at least by means of at least one size parameter of the damaged spot (60), is within a predetermined value range, and
- the number of intermediate layers (20) is dependent on the at least one size parameter of the damaged spot (60), wherein
a dimensional quotient QL results at least from a width of the repair patch in relation to at least the size parameter of a length of the damaged spot (60) in a circumferential direction of the vehicle tire, wherein the predetermined value range is QL = 2 - 9, and
a dimensional quotient QR results at least from a length of the repair patch in relation to at least the size parameter of a length of the damaged spot (60) in a radial direction of the vehicle tire, wherein the predetermined value range is QR = 4 - 13.

2. The vehicle tire according to claim 1, **characterized in that**
the size parameter of the damaged spot (60) comprises a surface area of the damaged spot, a radius of the damaged spot, a length of the damaged spot in the circumferential direction of the vehicle tire and/or a length of the damaged spot in a radial direction of the vehicle tire.

3. The vehicle tire according to at least one of the preceding claims, **characterized in that**
the predetermined value range is QL = 3 - 9 and QR = 4 - 10 for a damaged spot (60) with a position in a region of a side wall of the vehicle tire; and
the predetermined value range is QL = 2 -5 and QR = 4 -13 for a damaged spot (60) with a position in the region of the tread of the vehicle tire.

4. The vehicle tire according to at least one of the preceding claims, **characterized in that**
the dimensional quotient (Q) reflects at least one value for a size of a surface area of the repair patch in relation to at least one value of a size of the surface area of the damaged spot (60).

5. The vehicle tire according to at least one of the preceding claims, **characterized in that**
the number of intermediate layers (20) depends on the size parameter of the damaged spot (60) so as not to exceed a maximum permissible bulge of the repair patch.

6. The vehicle tire according to at least one of the preceding claims, **characterized in that**
the at least one intermediate layer (20) substantially has structured fibers (70).

7. The vehicle tire according to claim 6, **characterized in that**
the material of the structured fibers (70) comprises metal, natural fibers, in particular cotton, plastics, glass and/or carbon.

8. The vehicle tire according to at least one of the preceding claims, **characterized in that**
the external dimensions of the repair patch (1) substantially correspond to the external dimensions at least of the at least one intermediate layer (20).

9. The vehicle tire according to at least one of the preceding claims, **characterized in that**
different external dimensions of the repair patch (1) are predefined with a different number of intermediate layers (20) as different repair patch types.

10. A method for repairing a vehicle tire by means of a repair patch (1) according to any of the preceding claims, wherein
- external dimensions of the repair patch (1) and a number of intermediate layers (20) of the repair patch (1) are determined dependent on at least one size parameter of a damaged spot (60) of the vehicle tire, and
- the repair patch (1) is fixedly connected to the vehicle tire in the region of the damaged spot (60), wherein
the external dimensions are determined in such a way that values of a dimensional quotient (Q) are within a predetermined value range, wherein
a dimensional quotient QL results at least from a width of the repair patch in relation to at least the size parameter of a length of the damaged spot (60) in a circumferential direction of the vehicle tire, wherein the predetermined value range is QL = 2 - 9, and
a dimensional quotient QR results at least from a length of the repair patch in relation to at least the size parameter of a length of the damaged spot (60) in a radial direction of the vehicle tire, wherein the predetermined value range is QR = 4 - 13.

11. The method according to claim 10, wherein
a determination of the external dimensions of the repair patch (1) and the number of intermediate layers (20) is carried out by means of a repair chart, wherein the repair chart predetermines the repair patch type to be selected, in particular the external dimensions and the number of intermediate layers (20), dependent on a position of the damaged spot (60) at the vehicle tire and the at least one size parameter of the damaged spot (60).

## Revendications

1. Pneumatique de véhicule ayant une zone endommagée et comprenant un emplâtre de réparation, l'emplâtre de réparation comprenant :
- une couche de couverture (10),
- une couche de liaison (30) destinée à être appliquée sur une zone endommagée (60) du pneumatique de véhicule, et
- au moins une couche intermédiaire (20) disposée entre la couche de couverture et la couche de liaison,
dans lequel
- l'emplâtre de réparation (1) présente des dimensions extérieures telles qu'un quotient dimensionnel (Q), formé au moyen d'au moins un paramètre de taille de la zone endommagée (60), se situe à l'intérieur d'une plage de valeurs prédéfinie, et
- le nombre de couches intermédiaires (20) dépend d'au moins un paramètre de taille de la zone endommagée (60),
un quotient dimensionnel QL résulte au moins d'une largeur de l'emplâtre de réparation par rapport à au moins le paramètre de taille d'une longueur de la zone endommagée (60) dans une direction circonférentielle du pneumatique du véhicule,
la plage de valeurs prédéfinie est QL = 2 - 9,
et un quotient dimensionnel QR résulte au moins d'une longueur de l'emplâtre de réparation par rapport à au moins le paramètre de taille d'une longueur de la zone endommagée (60) dans une direction radiale du pneumatique du véhicule,
la plage de valeurs prédéfinie est QR = 4 - 13.

2. Pneumatique de véhicule selon la revendication 1,
**caractérisé en ce que** le paramètre de taille de la zone endommagée (60) inclut une superficie de la zone endommagée, un rayon de la zone endommagée, une longueur de la zone endommagée dans la direction circonférentielle du pneumatique du véhicule et/ou une longueur de la zone endommagée dans la direction radiale du pneumatique du véhicule.

3. Pneumatique de véhicule selon l'une au moins des revendications précédentes,
**caractérisé en ce que** la plage de valeurs prédéfinie est QL = 3 - 9 et QR = 4 - 10 pour une zone endommagée (60) ayant une position dans une zone d'un flanc du pneumatique du véhicule ; et
la plage de valeurs prédéfinie est QL = 2 - 5 et QR = 4 - 13 pour une zone endommagée (60) ayant une position dans la zone de la bande de roulement du pneumatique du véhicule.

4. Pneumatique de véhicule selon l'une au moins des revendications précédentes,
**caractérisé en ce que** le quotient dimensionnel (Q) représente au moins une valeur pour une taille d'une superficie de l'emplâtre de réparation par rapport à au moins une valeur d'une taille de la superficie de la zone endommagée (60).

5. Pneumatique de véhicule selon l'une au moins des revendications précédentes,
**caractérisé en ce que** le nombre de couches intermédiaires (20) dépend du paramètre de taille de la zone endommagée (60) de telle sorte qu'une hernie maximale admissible de l'emplâtre de réparation ne soit pas dépassée.

6. Pneumatique de véhicule selon l'une au moins des revendications précédentes,
**caractérisé en ce que** ladite au moins une couche intermédiaire (20) présente des fibres (70) disposées de manière sensiblement structurée.

7. Pneumatique de véhicule selon la revendication 6,
**caractérisé en ce que** le matériau des fibres (70) disposées de manière structurée contient du métal, des fibres naturelles, en particulier du coton, de la matière plastique, du verre et/ou du carbone.

8. Pneumatique de véhicule selon l'une au moins des revendications précédentes,
**caractérisé en ce que** les dimensions extérieures de l'emplâtre de réparation (1) correspondent sensiblement aux dimensions extérieures de ladite au moins une couche intermédiaire (20).

9. Pneumatique de véhicule selon l'une au moins des revendications précédentes,
**caractérisé en ce que** des dimensions extérieures différentes de l'emplâtre de réparation (1) ayant un nombre différent de couches intermédiaires (20) sont prédéfinies comme différents types d'emplâtre de réparation.

10. Procédé de réparation d'un pneumatique de véhicule au moyen d'un emplâtre de réparation (1) selon l'une des revendications précédentes, dans lequel
- les dimensions extérieures de l'emplâtre de réparation (1) et un nombre de couches intermédiaires (20) de l'emplâtre de réparation (1) sont déterminés en fonction d'au moins un paramètre de taille d'une zone endommagée (60) du pneumatique du véhicule, et
- l'emplâtre de réparation (1) est relié solidairement au pneumatique du véhicule au niveau de la zone endommagée (60),
les dimensions extérieures sont déterminées de telle sorte que des valeurs d'un quotient dimensionnel (Q) se situent à l'intérieur d'une plage de valeurs prédéfinie,
un quotient dimensionnel QL résulte au moins d'une largeur de l'emplâtre de réparation par rapport à au moins le paramètre de taille d'une longueur de la zone endommagée (60) dans une direction circonférentielle du pneumatique du véhicule,
la plage de valeurs prédéfinie est QL = 2 - 9,
et un quotient dimensionnel QR résulte au moins d'une longueur de l'emplâtre de réparation par rapport à au moins le paramètre de taille d'une longueur de la zone endommagée (60) dans une direction radiale du pneumatique du véhicule,
la plage de valeurs prédéfinie est QR = 4 - 13.

11. Procédé selon la revendication 10,
dans lequel on détermine les dimensions extérieures de l'emplâtre de réparation (1) et le nombre de couches intermédiaires (20) au moyen d'un tableau des dommages, le tableau des dommages indiquant le type d'emplâtre de réparation à choisir, en particulier les dimensions extérieures et le nombre de couches intermédiaires (20), en fonction d'une position de la zone endommagée (60) sur le pneumatique du véhicule et d'au moins un paramètre de taille de la zone endommagée (60).
